# EUROPEAN PATENT APPLICATION

(11) **EP 2 492 782 A1**
(43) Date of publication of application: **29.08.2012**
(21) Application number: 11156327.6
(22) Date of filing: 28.02.2011
(51) Int. Cl.: G06F 3/041, G06F 3/01, G09B 21/00

(54) **Patterned activation of piezoelectric actuators**

(71) Applicant: Research In Motion Limited, Waterloo, ON N2L 3W8 (CA)
(72) Inventor: WEBER, Arnett, Waterloo Ontario N2L 3W8 (CA); DIKUN, Raymond Michael, Waterloo Ontario N2L 3W8 (CA)
(74) Representative: Roberts, Gwilym Vaughan

(57) **Abstract**

An electronic device comprises piezoelectric actuators. Piezoelectric actuators are arranged in patterns within electronic device. Piezoelectric actuators are actuated in sub-patterns. Sub-patterns include Braille alphabet and Morse code. Piezoelectric actuators closest to touch input on a device can be actuated. Piezoelectric actuators can be actuated in sub-patterns corresponding to input received from environment such as caller identification codes or email codes.

## Description

### FIELD

The present disclosure relates to electronic devices, and more specifically to activation of piezoelectric devices within electronic devices.

### BACKGROUND

Electronic devices are becoming more prevalent and more advanced. Electronic devices can include, but are not limited to, cellular telephones, smart telephones, wireless personal digital assistants (PDAs), and laptop computers with wireless 802.11 or Bluetooth capabilities. These devices can run on a wide variety of networks from data-only networks such as Mobitex® and DataTAC® networks to complex voice and data networks such as GSM/GPRS, CDMA, EDGE, UMTS and CDMA2000 networks. Electronic devices can contain displays, which can be touchscreens. Electronic devices can contain piezoelectric actuators which can enable the input and output of information.

### BRIEF DESCRIPTION OF THE DRAWINGS

Implementations of the present technology will now be described, by way of example only, with reference to the attached Figures, wherein:

Figure 1 illustrates a block diagram of an electronic device in a communication network in accordance with an example implementation;

Figure 2 illustrates a front view of an electronic device within the technology;

Figure 3 illustrates a plot of the frequency response of a piezoelectric material;

Figure 4 illustrates a relationship between voltage applied to a piezoelectric material and deformation of a piezoelectric material;

Figure 5 illustrates a side view of piezoelectric actuators within a housing of an electronic device within the technology;

Figures 6 illustrates a side view of deformed piezoelectric actuators beneath the display within the technology;

Figure 7 illustrates a top plan view of an electronic device containing four piezoelectric actuators;

Figure 8 illustrates a top plan view of an electronic device containing six piezoelectric actuators;

Figure 9 illustrates a top plan view of piezoelectric actuators within a housing of an electronic device within the technology;

Figure 10 illustrates a top plan view of an electronic device illustrating actuation of actuators closest to a touch;

Figure 11 illustrates patterned actuation of piezoelectric actuators within a device;

Figure 12 illustrates an array of six piezoelectric actuators within an electronic device;

Figure 13 illustrates an array of eight piezoelectric actuators within an electronic device;

Figure 14 illustrates the activation of piezoelectric actuators in correspondence with a Braille alphabet; and

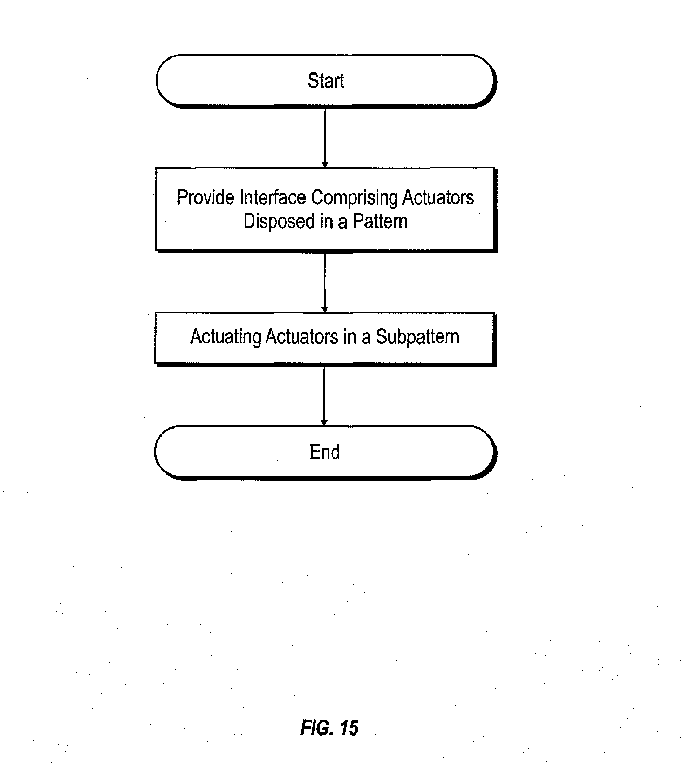

Figure 15 illustrates a flowchart of a method in accordance with the technology.

### DETAILED DESCRIPTION

As will be appreciated for simplicity and clarity of illustration, where appropriate, reference numerals have been repeated among the different figures to indicate corresponding or analogous elements. In addition, numerous specific details are set forth in order to provide a thorough understanding of the implementations described herein. However, it will be understood that the implementations described herein can be practiced without these specific details. In other instances, methods, procedures and components have not been described in detail so as not to obscure the related relevant feature being described. Also, the description is not to be considered as limiting the scope of the implementations described herein.

Several definitions that apply throughout the disclosure of the technology will now be presented. The word "coupled" is defined as connected, whether directly or indirectly through intervening components, and is not necessarily limited to physical connections. The term "communicatively coupled" is defined as connected, whether directly or indirectly through intervening components, is not necessarily limited to a physical connection, and allows for the transfer of data. The term "electronic device" is defined as any electronic device that is capable of at least accepting information entries from a user and includes the device's own power source. A "wireless communication" includes communication that occurs without wires using electromagnetic radiation. The term "memory" refers to transitory memory and non-transitory memory. For example, non-transitory memory can be implemented as Random Access Memory (RAM), Read-Only Memory (ROM), flash, ferromagnetic, phase-change memory, and other non-transitory memory technologies.

The technology includes methods, uses and implementations of one or more piezoelectric devices within an electronic device.

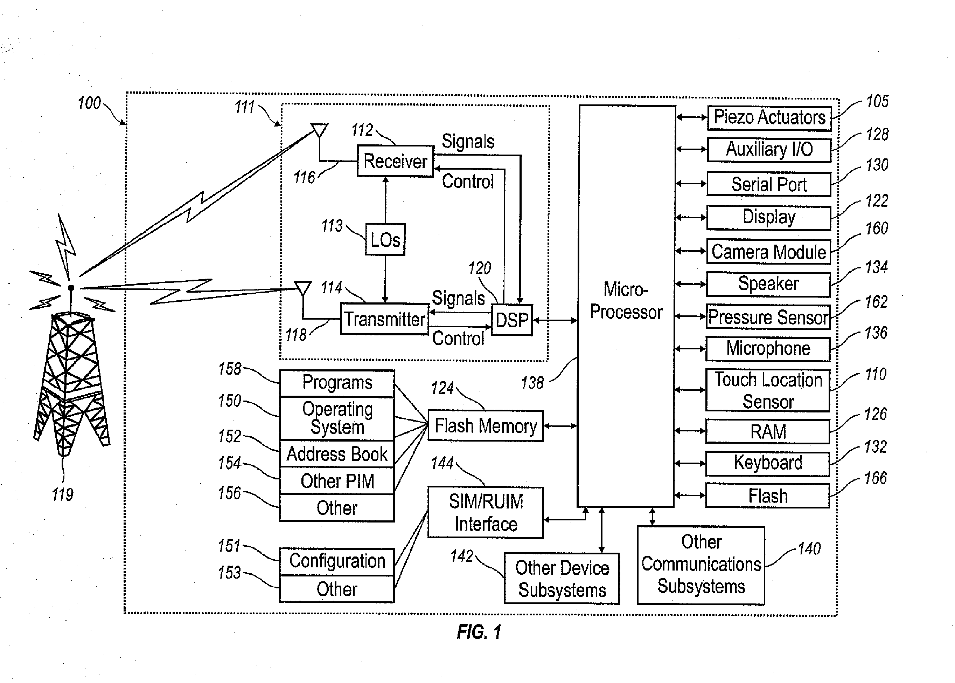

Referring to Figure 1, an example electronic device **100** can be communicatively coupled to a wireless network **219.** The Figure 1 and the other figures illustrate non-limiting examples, and modifications may be necessary to make an electronic device **100** work in particular network environments. In the illustrated implementation, the electronic device **100** is a smart phone. In other implementations, however, an electronic device 100 can be a personal digital assistant (PDA), laptop computer, desktop computer, server, or other electronic device capable of sending and receiving electronic messages.

With further reference to Figure **1**, a block diagram of a electronic device in a communication network **119** in accordance with an exemplary implementation is illustrated. As shown, the electronic device **100** can include a microprocessor **138** that controls the operation of the electronic device **100,** such as facilitating communications, providing a graphical user interface, executing programs, and so forth. A communication subsystem **111** performs communication transmission and reception with the wireless network **119.** The microprocessor **138** can be coupled to piezoelectric actuators **105** housed within the electronic device **100.** The microprocessor **138** further can be coupled with an auxiliary input/output (I/O) subsystem **128** that can be coupled to the electronic device 100. Additionally, in at least one implementation, the microprocessor **138** can be coupled to a serial port (for example, a Universal Serial Bus port) **130** that facilitates communication with other devices or systems via the serial port **130.** A display **122** can be communicatively coupled to the microprocessor **138** to facilitate display of information to an operator of the electronic device **100.** Piezoelectric actuators **105** can be housed proximate the display **122** and can enable the electronic device **100** to transmit data in conjunction with, in complement to, or instead of, information transmitted through the display **122**. When the electronic device **100** is equipped with a keyboard **132,** which can be physical or virtual (for example, displayed), the keyboard **132** can be communicatively coupled to the microprocessor **138.** The electronic device **100** can include one or more speakers **134** and one or more microphones **136,** which can advantageously be communicatively coupled to the microprocessor **138** and discussed in further detail below. Other communication subsystems **140** and other electronic device subsystems **142** are generally indicated as communicatively coupled with the microprocessor **138.** An example of a communication subsystem 240 is a short-range communication system such as a BLUETOOTH^{®} communication module or a WI-FI^{®} communication module (a communication module in compliance with IEEE 802.11b) and associated circuits and components. Additionally, the microprocessor 138 can perform operating system functions and executes programs or software applications on the electronic device **100.** In some implementations, not all of the above components are included in the electronic device **100.** The auxiliary I/O subsystem 128 can take the form of one or more different navigation tools (multi-directional or single-directional), external display devices such as keyboards, and other subsystems capable of providing input or receiving output from the electronic device **100.**

The auxiliary I/O subsystem **128** can take the form of a variety of different navigation tools (multi-directional or single-directional) such as an optical navigation module or tool. In other implementations, a trackball, thumbwheel, a navigation pad, a joystick, touch-sensitive interface, or other I/O interface can be used. The navigation tool can be located on a front surface of the electronic device **100** or may be located on any exterior surface of the electronic device **100.** Other auxiliary I/O subsystems can include external display devices and externally connected keyboards (not shown). While the above examples have been provided in relation to the auxiliary I/O subsystem **128**, other subsystems capable of providing input or receiving output from the electronic device **100** are considered within the scope of the technology. Additionally, other keys may be placed along the side of the electronic device **100** to function as escape keys, volume control keys, scrolling keys, power switches, or user programmable keys, and may likewise be programmed accordingly.

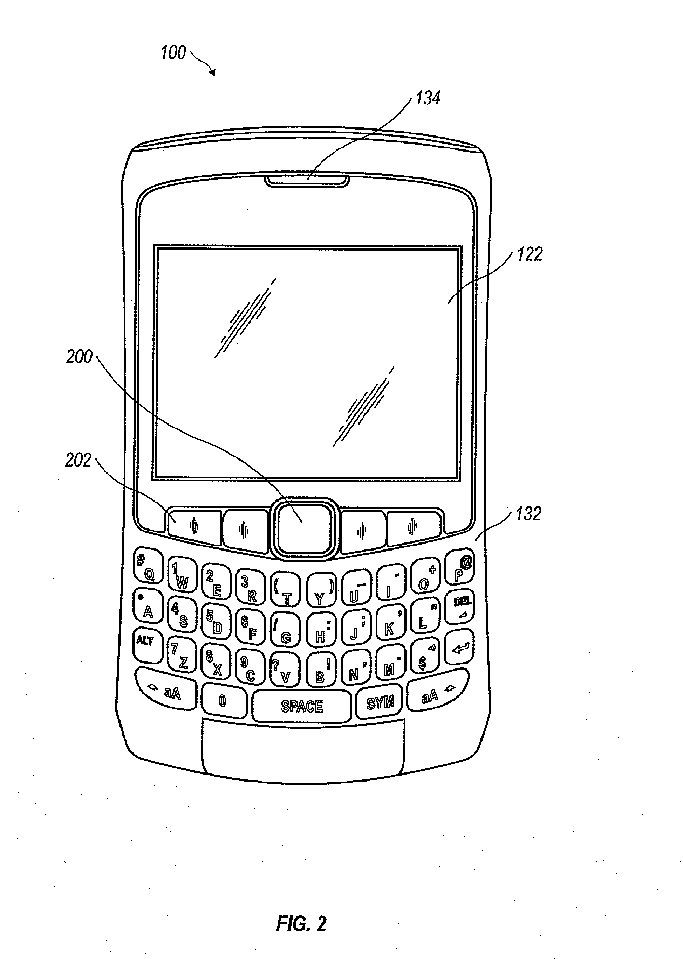

As may be appreciated from Figure 2, the electronic device **100** can have a display **122** located above the keyboard **132** constituting a user input and suitable for accommodating textual input to the electronic device 100. The front face of an electronic device **100** can have a navigation row **200.** As shown, an electronic device **100** can be of a unibody construction, also known as a "candy-bar" design. In alternate implementations, an electronic device **100** can be a "clamshell" or a "slider" design.

As described above, an electronic device **100** can include the auxiliary input **128** that acts as a cursor navigation tool **202** and which can be also exteriorly located upon the front face of the electronic device **100**. The front face location of the navigation tool can allow the navigation tool to be easily thumb-actuable or finger-actuable like the keys of the keyboard **132.** An implementation provides the navigation tool in the form of the optical navigation module having one or more sensors, such as a capacitive sensor, optical sensor, or both, which can be utilized to instruct two-dimensional or three-dimensional screen cursor movement in substantially any direction, as well as act as an actuator when the optical navigation module is depressed like a button. The placement of the navigation tool **202** may be above the keyboard **132** and below the display **122;** here, it can avoid interference during keyboarding and does not block the operator's view of the display screen **122** during use, for example, as shown in Figure 2.

The electronic device **100** can be configured to send and receive messages. As will be described in greater detail below, the device **100** can be enabled to actuate one or more actuators **105** upon the sending or receiving of email or both sending and receiving email. The electronic device **100** includes a body or housing which can, in some implementations, be configured to be held in one hand by an operator of the electronic device **100** during text entry. The display **122** is included which is located on the front face of the body and upon which information is displayed to the operator during text entry. The electronic device **100** can also be configured to send and receive voice communications such as electronic telephone calls. As will be described in greater detail below, a device can be configured to actuate one or more actuators **105** upon the sending telephone calls or receiving telephone calls or both sending and receiving telephone calls. The electronic device **100** can also include a camera **121** to allow the user to take electronic photographs which can be referred to as photos or pictures.

The electronic device **100** can be equipped with components to enable operation of various programs, as shown in Figure 1. As shown, the memory **124** can provide storage for the operating system **150,** device programs **158,** data, and the like. The operating system **150** can be generally configured to manage other programs **158** that are also stored in memory **124** and executable on the processor **138.** The operating system **150** can handle requests for services made by programs **158** through predefined program **158** interfaces. More specifically, the operating system **150** can typically determine the order in which multiple programs **158** are executed on the processor **138** and the execution time allotted for each program **158,** manages the sharing of memory **124** among multiple programs **158,** handles input and output to and from other device subsystems **142,** and so forth. In addition, operators can interact directly with the operating system **150** through a user interface, typically including the keyboard **132** and display screen **122**. The operating system **150**, programs **158**, data, and other information can be stored in memory **124**, RAM 126, read-only memory (ROM), or another suitable storage element (not shown). An address book **152,** personal information manager (PIM) **154,** and other information **156** can also be stored.

The electronic device **100** can be enabled for two-way communication within voice, data, or voice and data communication systems. A Subscriber Identity Module (SIM) or Removable User Identity Module (RUIM) can be utilized to authorize communication with the communication network **119.** A SIM/RUIM interface within the electronic device **100** can interface a SIM/RUIM card to the microprocessor 138 and facilitates removal or insertion of a SIM/RUIM card (not shown). The SIM/RUIM card features memory and can hold key configurations **151,** and other information **153** such as identification and subscriber related information. The electronic device **100** can be equipped with an antenna **118** for transmitting signals to the communication network **119** and another antenna **116** for receiving communication from the communication network **119.** Alternatively, a single antenna (not shown) can be utilized to transmit and receive signals. A communication subsystem **111** can include a transmitter **114** and receiver **112,** one or more antennae **116, 118,** local oscillators (LOs) **113,** and a processing module **120** such as a digital signal processor (DSP) **120.**

The electronic device **100** can include a touch-sensitive display or touchscreen **124** that includes one or more touch location sensors, an overlay, and a display **122,** such as a liquid crystal display (LCD) or light emitting diode (LED) display, such as shown in Figure 2. The touch location sensor(s) can be a capacitive, resistive, infrared, surface acoustic wave (SAW), or other type of touch-sensitive sensor and can be integrated into the overlay. The overlay, or cover, can be comprised of laminated glass, plastic, or other suitable material(s) and is advantageously translucent or transparent. A touch, or touch contact, can be detected by a touchscreen and processed by the processor **138,** for example, to determine a location of the touch. Touch location data can include the center of the area of contact or the entire area of contact for further processing. A touch may be detected from a contact member, such as a body part of a user, for example a finger or thumb, or other objects, for example a stylus, pen, or other pointer, depending on the nature of the touch location sensor.

Referring to Figure 2, a front view of an electronic device in accordance with an exemplary implementation is illustrated. The electronic device can house a POP having battery terminals connected to a battery housed within the device. As shown, the electronic device **100** can have a full QWERTY keyboard **132** or a reduced keyboard (not illustrated). Each key of the keyboard **132** can be associated with at least one indicia representing an alphabetic character, a numeral, or a command, (such as a space command, return command, or the like). The plurality of the keys having alphabetic characters can be arranged in a standard keyboard layout. This standard keyboard layout can be a QWERTY layout, a QZERTY layout, a QWERTZ layout, an AZERTY layout, a Dvorak layout, a Russian keyboard layout, a Chinese keyboard layout, or other similar layout. These standard layouts are provided by way of example and other similar standard layouts are considered within the scope of the technology. The keyboard layout can be based on the geographical region in which the handheld device is intended for sale. In some examples, the keyboard can be interchangeable such that the user can switch between layouts. In other examples, the keyboard is a virtual keyboard provided on a touch screen display **122.**

Implementations of the technology involve one or more piezoelectric actuators **105** which operate using piezoelectricity. Piezoelectricity is the charge which accumulates in certain solid materials (notably crystals, certain ceramics, and biological matter such as bone, DNA and various proteins) in response to applied mechanical strain. Conversely, application of electricity to certain materials, can cause those materials to change shape or deform. The piezoelectric effect can be the electromechanical interaction between the mechanical and the electrical state in crystalline materials with no inversion symmetry. The piezoelectric effect is a reversible process in that materials exhibiting the direct piezoelectric effect (the internal generation of electrical charge resulting from an applied mechanical force) also can exhibit the reverse piezoelectric effect (the internal generation of a mechanical force resulting from an applied electrical field). For example, lead zirconate titanate crystals will generate measurable piezoelectricity when their static structure is deformed by about 0.1% of the original dimension. Conversely, lead zirconate titanate crystals will change about 0.1% of their static dimension when an external electric field is applied.

The nature of the piezoelectric effect is related to the occurrence of electric dipole moments in solids. The latter may either be induced for ions on crystal lattice sites with asymmetric charge surroundings or may directly be carried by molecular groups. The dipole density or polarization (dimensionality [Cm/m3]) may easily be calculated for crystals by summing up the dipole moments per volume of the crystallographic unit cell. As every dipole is a vector, the dipole density is also a vector which can also be called a directed quantity. Dipoles near each other tend to be aligned in regions called Weiss domains. The domains are usually randomly oriented, but can be aligned using the process of poling (not the same as magnetic poling), a process by which a strong electric field is applied across the material, usually at elevated temperatures.

In piezoelectric actuators **105,** electric fields correspond to changes in the width of the actuator. Multilayer ceramics, using layers thinner than 100 micrometers, can allow reaching high electric fields with voltage lower than 150 Volts. Multilayer ceramics are used within two kinds of actuators **105:** direct piezo actuators **105** and amplified piezoelectric actuators **105.** While a direct actuator's stroke is generally lower than 100 micrometres, amplified piezo actuators **105** can reach millimeter strokes. By imposing pulsed variations in electric fields upon piezoelectric actuators **105,** pulsed deformations of piezoelectric actuators **105** can be achieved. As will be discussed further below, pulsed deformations of actuators **105** can be caused to occur in patterns within the technology.

Depending on how a piezoelectric material is cut, three main modes of operation can be distinguished: transverse, longitudinal, and shear. In a transverse mode of operation, a force is applied along a neutral γ-axis and the charges are generated along an x-axis, perpendicular to the line of applied force. The amount of charge depends on the geometrical dimensions of the respective piezoelectric element. In a longitudinal mode, the amount of charge produced is strictly proportional to the applied force and is independent of size and shape of the piezoelectric element. Using several elements that are mechanically in series and electrically in parallel is a way to increase the charge output. In a shear mode, charges produced are proportional to the applied forces and are independent of an element's size and shape. Actuation of actuators **105** can be according to carried out in accordance with a transverse mode, a longitudinal mode, or a shear mode, or any combination of a transverse mode, a longitudinal mode, or a shear mode.

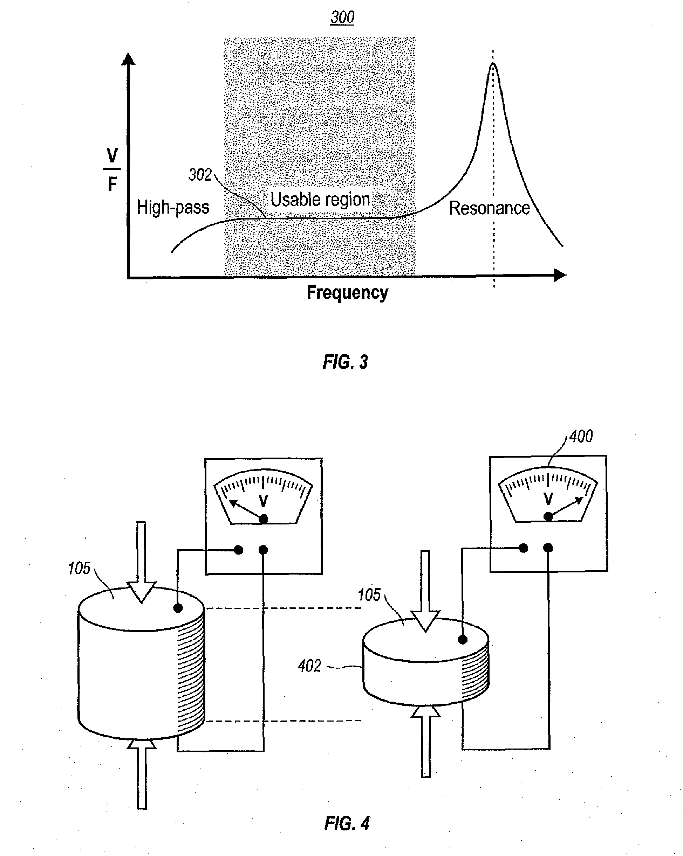

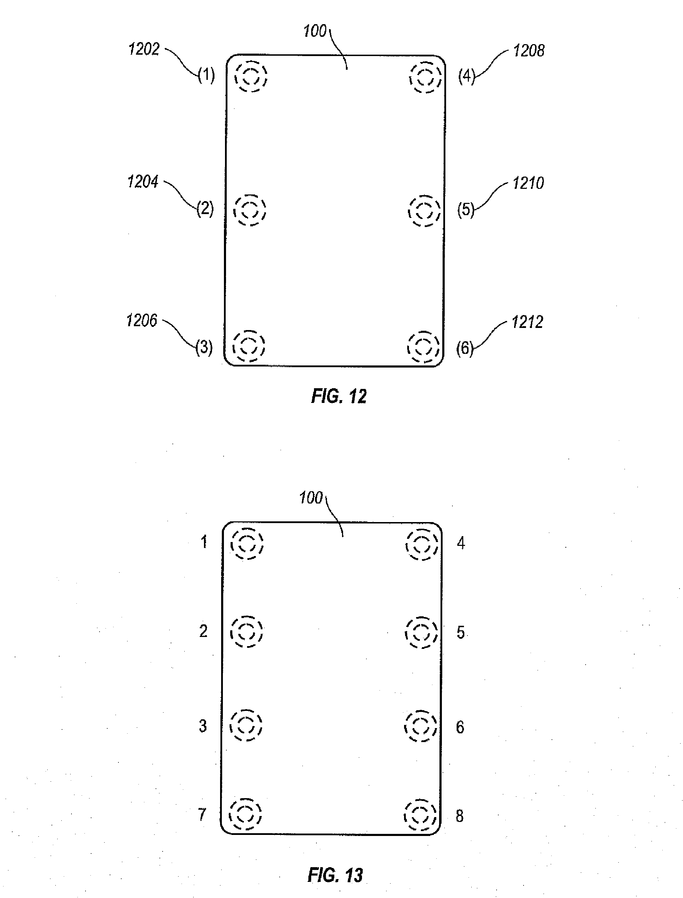

In a flat region **302** of a frequency response **300** of a piezoelectric material, (as illustrated in Figure 3), a piezoelectric material can be used as an actuator. In the flat region **302,** load and leakage resistance are large enough that low frequencies of interest are not lost. As illustrated in Figure 12, a voltage **400** imposed on a piezoelectric disk (e.g., **105**) can cause a piezoelectric disk **105** to deform **402.** Varied or pulsed imposed voltages can cause varied or pulsed deformations in a piezoelectric disk or actuator **105.**

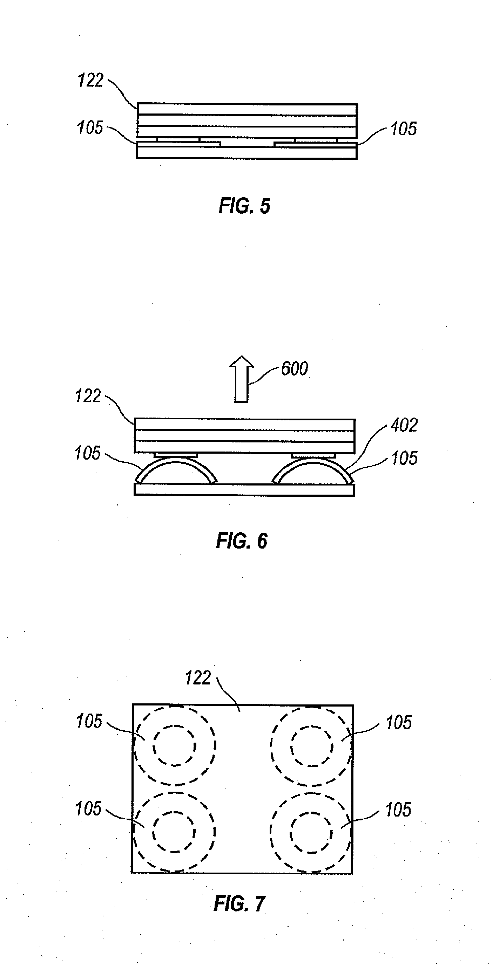

Referring to Figure 5, a side view of piezoelectric actuators **105** is shown beneath a display **122.** The piezoelectric actuators **105** are not deformed. Figure 6 illustrates deformed piezoelectric actuators **105** within an electronic device. The deformation of the actuators **105** can be caused by imposing current or voltage to the actuators **105** as discussed above. Depending on the configuration of the display **122** within housing of a device **100,** deformation of the actuators can cause the display **122** of a device **100** to move **600,** as illustrated in Figure 6.

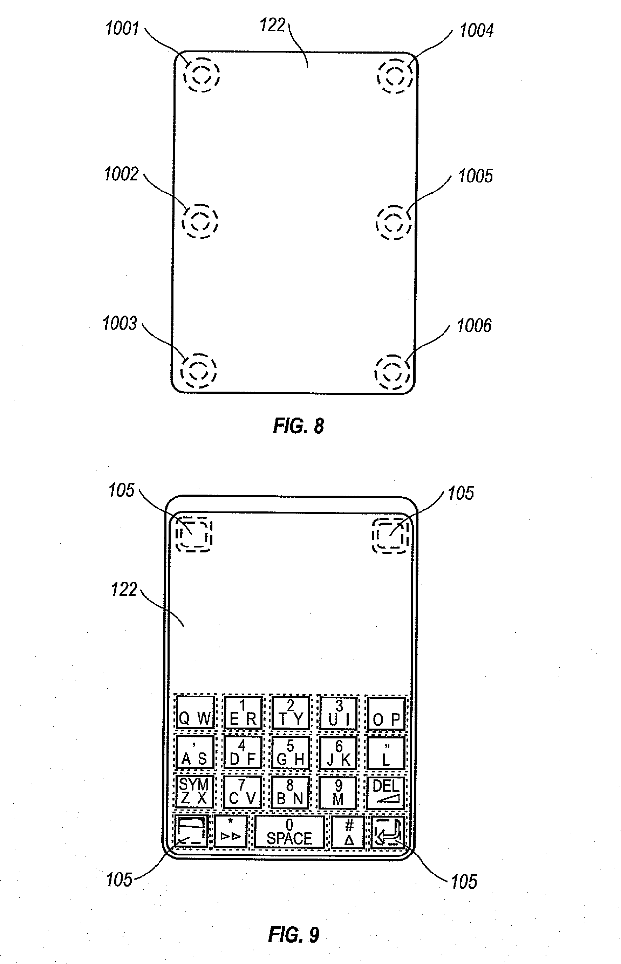

Figure 7 is a top plan view of four piezoelectric actuators **105** within a housing of an electronic device **100** within the technology. Figure 8 is a top plan view of an electronic device containing an array of six piezoelectric actuators **105.** Figure 9 is a top plan view of an electronic device containing an array of four piezoelectric actuators **105.** As shown in Figure 9, one or more actuators can be placed beneath one or more keys of a keyboard **132** or a virtual keyboard presented on display **122.**

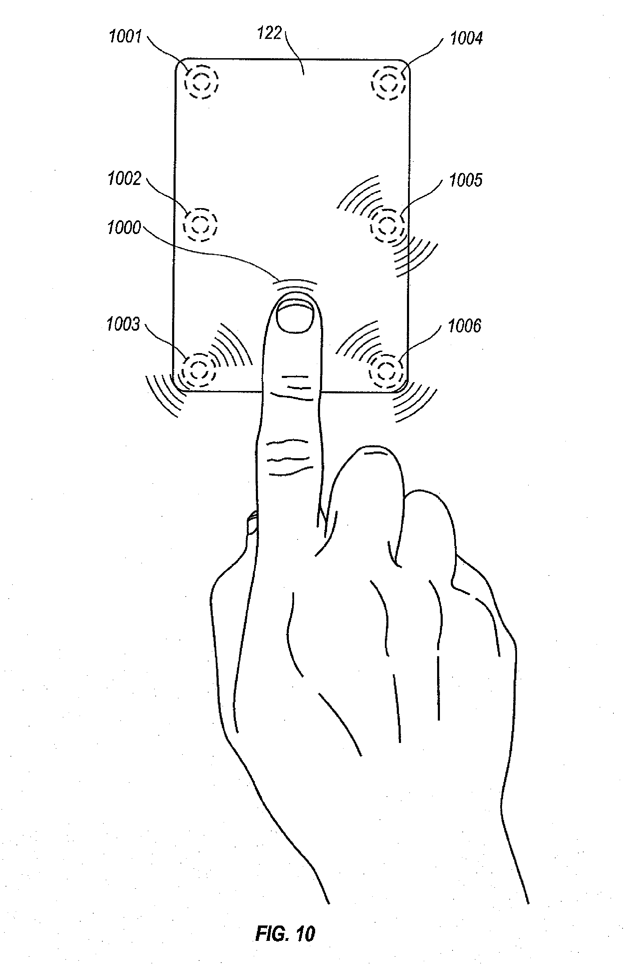

In at least one implementation of the technology, a subset of actuators **105** can be actuated in pattern relating to the position of a touch **1000** on a display **122** of a device 100, as determined by one or more touch location sensors **110,** which can enhance a user's use of a touchscreen display **122.** Figure 10 illustrates an example in which piezoelectric actuators (e.g. **105**) **1003, 1005** and **1006,** which are closest to a touch **1000** are actuated. Actuators **1001, 1002** and **1003** are not actuated. Powering a subset of available actuators **105** closest to a touch **1000** can use less power than actuation of all actuators **105** within a device **100.**

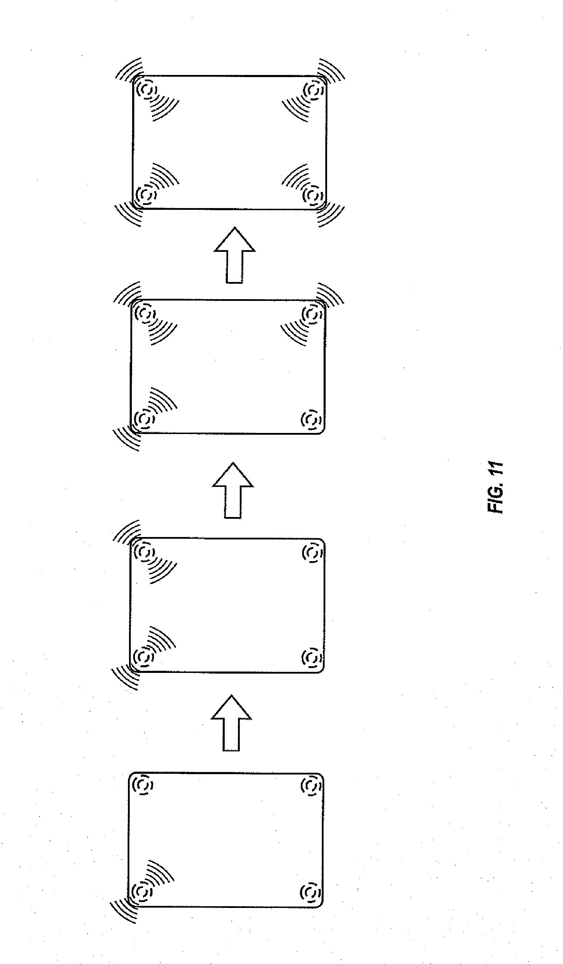

An array of actuators **105** can be used to give position-specific or pattern based feedback to a user of a device **100.** In at least one implementation of the technology, an array of actuators **105** can give patterned based feedback to a user. For example, Figure 11 illustrates, moving from left to right in Figure 11, a situation in which one, then two, then three and then four actuators **105** are activated in a sequence. In at least one implementation, a device **100** can be configured to have actuation of actuators **105** be correlated to the identity of a sender of email messages or a phone number received by a device **100.** For example, like ringtones, different feedback patterns can be applied to different callers or notification types. As another example, actuators **105** can be triggered in a clockwise rotation for a specific caller (see e.g. Figure 11), or for example, actuators **105** can be triggered in a left, right, left, right pattern for a meeting reminder. As another example, actuators **105** triggered in a top, bottom, top, bottom pattern for new email). As will be discussed in further detail below, actuators **105** can be actuated in one or more Braille patterns. In at least one implementation of the technology, actuators **105** can be actuated in one or more Morse code patterns. Other patterned actuations of one or more actuators **105** within one or more arrays of actuators **105** are possible within the technology. As described above a device can be configured to output a pattern triggered by an event, such as for example the receipt of a meeting notification, the receipt of a phone call from a particular phone number or the receipt of an email from a particular sender, the receipt of all phone calls or the receipt of all emails. Within the technology, other patterned actuations of actuators **105** can be triggered by other events, such as the powering on of a device, the acceptance of an appointment, the completion of a data download, and the like.

In order to increase the number of possible permutations of patterns of actuation, the number of actuators **105** within a device **100** housing, whether beneath or not beneath a display **122,** can be increased. For example, Figure 12 illustrates a device having an array of six actuators **105.** As a further example, Figure 13 illustrates a device having eight actuators.

As stated above, within the technology, two columns of four actuators **105** can be implemented with a total of eight piezoelectric actuators **105** within a device 100. Actuation of individual piezoelectric actuators **105** can be performed in the patterns set forth in ***Braille Patterns, 1991-2010,*** which is fully incorporated by reference herein.

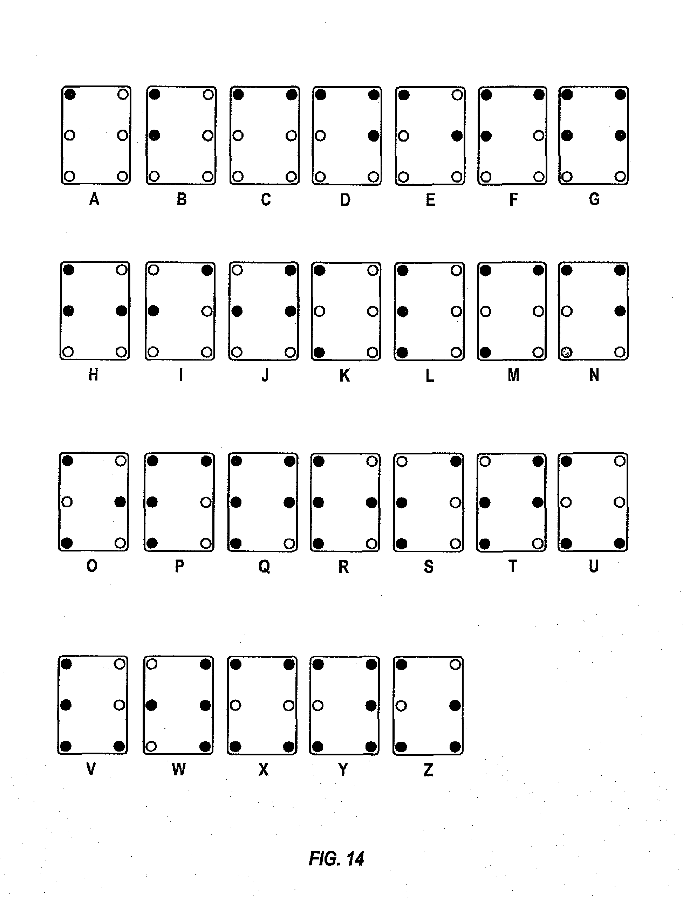

It can be beneficial to activate the piezoelectric actuators **105** in an electronic device in a Braille pattern. Braille was devised in 1821 by Louis Braille, a blind Frenchman. Each Braille character, or cell, is made up of six dot positions, arranged in a rectangle containing two columns of three dots each. A 'dot' may be indicated at any of the six positions to form sixty-four (2⁶) possible subsets, including the arrangement in which no 'dots' are raised. For reference purposes, a particular permutation may be described by naming the positions where 'dots' are raised, the positions being universally numbered one (**1202**)**,** two (**1204**)**,** three (**1206**)**,** from top to bottom, on the left, and four (**1208**)**,** five (**1210**), six (**1212**), from top to bottom, on the right, as shown in Figure 12. For example, dots 1202-1206-**1208** ( 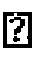 ) would describe a cell with three dots raised, at the top and bottom
in the left column and on top of the right column, i.e., the letter m. The lines of horizontal Braille text are separated by a space, much like visible printed text, so that the dots of one line can be differentiated from the Braille text above and below. Punctuation is represented by its own unique set of characters. Within the technology, 'dots' may be effectuated in an electronic device by the actuation of piezoelectric actuators **105** with each piezoelectric actuator **105** positioned in the location of a corresponding 'dot.' As illustrated in Figure 14, piezoelectric actuators **105** within an electronic device can be configured to be actuated (darker circles) in a pattern consistent with a Braille alphabet.

Braille can be extended to an eight-dot code, the presentation of which can be enabled by a device **100** comprising an array of eight actuators **105,** as illustrated in Figure 13. In eight-dot Braille the additional dots are added at the bottom of the cell, giving a matrix four dots high by two dots wide. The additional dots are given the numbers 7 (for the lower-left dot) and 8 (for the lower-right dot), as shown in Figure 13. Eight-dot Braille has the advantages that the case of an individual letter can directly coded in the cell containing the letter and that all ASCII characters can be represented in a single cell. All possible combinations of eight dots can be encoded by the Unicode standard. Braille with six dots is frequently stored as Braille ASCII.

In Braille ASCII the first ten letters of the alphabet are formed using only the top four dots (1, 2, 4, and 5). Like Greek numerals, these symbols also represent the digits 1 through 9 and 0. Adding dot 3 forms the next ten letters, and adding dot 6 forms the last six letters (except w) and the words and, for, of, the, and with. Omitting dot 3 from the letters U-Z and the five word symbols form nine digraphs (ch, gh, sh, th, wh, ed, er, ou, and ow) and the letter w, a digraph being a pair of letters representing a single speech sound. Six-dot Braille and Braille ASCII can be implemented using an array of six actuators **105** as illustrated in Figure 12, or using the upper six actuators within an array of eight actuators as illustrated in Figure 13. Eight-dot Braille can be implemented can be implemented using an array of eight actuators as illustrated in Figure 13.

Within the technology, the actuation of actuators **105** may be done in such a manner so as to accommodate a swipe or extended touch across a screen to enhance a user's tactile experience. For example, a user could swipe in an 'S'-shaped pattern across the Braille 'dots' (activated actuators, e.g. **105**) and the appropriate actuators **105** could fire as the finger passes. Actuation patterns may be enabled to allow a user to swipe the actuators **105** down one side of a device and up the other side of the device **100.** As another example, a user of a device **100** could swipe in a zig-zag shape to feel actuated actuators **105** in a pattern.

The technology can take the forms of hardware, software or both hardware and software elements. In some embodiments, the technology is implemented in software, which includes but is not limited to firmware, resident software, microcode, a Field Programmable Gate Array (FPGA) or Application-Specific Integrated Circuit (ASIC), etc. For real-time or near real-time use, an FPGA or ASIC can be implemented.

Furthermore, the technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of physical computer-readable media include a semiconductor or solid state memory, magnetic tape, a removable computer diskette, a random access memory (RAM), a read-only memory (ROM), a rigid magnetic disk and an optical disk. Examples of optical disks include compact disk - read only memory (CD-ROM), compact disk - read/write (CD-R/W) and DVD. Both processors and program code for implementing each as aspect of the technology can be centralized or distributed or both centralized and distributed.

A data processing system suitable for storing a computer program product of the technology and for executing program code of a computer program product include at least one processor coupled directly or indirectly to memory elements through a system bus. Memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some embodiments, the data processing system is implemented using one or both of FPGAs and ASICs.

The technology may be implemented in other specific forms without departing from its essential characteristics. Thus, the described implementations are to be construed in all respects only as illustrative and not restrictive. The scope of the technology is, therefore, indicated by the appended claims rather than by the foregoing description. All changes that come within the meaning and range of equivalency of the claims are to be embraced within the scope of the claims.

## Claims

1. An electronic device (100) comprising:
a touch-responsive user interface comprising:
a plurality of actuators (105) disposed about the interface in a pattern,
wherein the actuators (105) are actuable in at least one subpattern.

2. The electronic device of Claim 1 or 2, wherein:
the actuators (105) are piezoelectric actuators (105).

3. The electronic device (100) of Claim 1, 2, or 3, wherein:
the at least one subpattern corresponds to actuation of the actuator closest to a touch (1000).

4. The electronic device (100) of Claim 1, wherein:
the at least one subpattern corresponds to one of a pattern of a Braille alphabet or a pattern of Morse code.

5. The electronic device (100) of Claim 1, 2, 3, or 4, wherein:
the at least one subpattern corresponds to a predetermined pattern associated with a notification received by the electronic device (100).

6. A computer-implemented method comprising:
providing a touch-responsive user interface comprising a plurality of actuators (105) disposed about the interface in a pattern, and
actuating the actuators (105) in at least one subpattern.

7. The computer-implemented method of claim 6, wherein:
the actuators (105) are piezoelectric actuators (105).

8. The computer-implemented method of claim 6 or 7, wherein:
the at least one subpattern corresponds to actuation of the actuator closest to a touch (1000).

9. The computer-implemented method of claim 6, 7, or 8, wherein:
the at least one subpattern corresponds to one of a pattern of a Braille alphabet or a pattern of Morse code.

10. The computer-implemented method of claim 6, 7, 8, or 9, wherein:
the at least one subpattern corresponds to a predetermined pattern associated with a phone number received by the electronic device (100).

11. The computer-implemented method of claim 6, 7, 8, 9, or 10,
wherein:
the at least one subpattern corresponds to a predetermined pattern associated with a notification received by the electronic device (100).

12. A computer program product, the computer product comprising:
at least one computer readable medium stored in an electronic device (100); and
at least one program module,
stored on the at least one medium, and
operative, upon execution by at least one processor for:
actuating actuators (105) disposed about a touch-responsive user interface in at least one subpattern.

13. The computer program product of claim 12, wherein:
the actuators (105) are piezoelectric actuators (105).

14. The computer program product of claim 12 or 13, wherein:
the at least one subpattern corresponds to actuation of the actuator closest to a touch (1000).

15. The computer program product of claim 12, 13, or 14, wherein:
the at least one subpattern corresponds to a predetermined pattern associated with a notification received by the electronic device (100).
